(19)

**Europäisches Patentamt**
**European Patent Office**
**Office européen des brevets**

(11) **EP 4 707 745 A1**

(12) **EUROPEAN PATENT APPLICATION**

(43) Date of publication:
**11.03.2026 Bulletin 2026/11**

(51) International Patent Classification (IPC):
*G01D 5/20* *(2006.01)*

(21) Application number: **24199146.2**

(22) Date of filing: **09.09.2024**

(52) Cooperative Patent Classification (CPC):
**G01D 5/202**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Melexis Technologies SA
2022 Bevaix (CH)**

(72) Inventors:
• **EL-SHENNAWY, Mohammed
01109 Dresden (DE)**
• **SACHSE, Eric
01109 Dresden (DE)**

(74) Representative: **Winger
Mouterij 16 bus 101
3190 Boortmeerbeek (BE)**

(54) **INDUCTIVE POSITION SENSOR**

(57) A position sensor for determining the position of a target includes a center-tapped transmit coil with three terminals: a first terminal, a center-tap, and a second terminal. The sensor has a transmitter that applies an oscillating signal across the first and second terminals of the transmit coil. A receiver is connected to the first terminal, second terminal, and center-tap of the transmit coil. The processing circuit calculates the target's position by applying a transformation to the signals received from the three terminals.

**FIG. 5**

EP 4 707 745 A1

**Description**

**Field of the invention**

The invention relates to the field of positioning sensing technologies. More specifically it relates to an inductive method and device for determining the position of a target.

**Background of the invention**

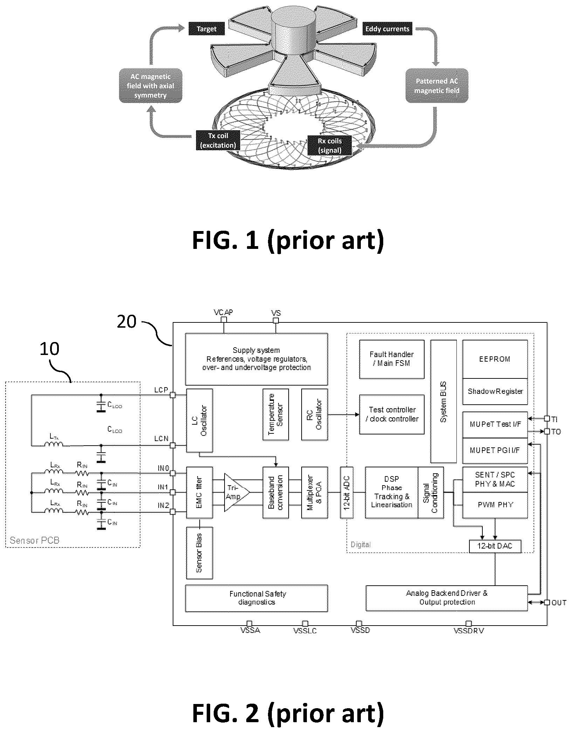

Inductive position sensors are widely used in various applications for accurately detecting the position of a target. In conventional inductive position sensors, as illustrated in FIG. 1, an integrated circuit (IC) is used to excite a transmit (TX) coil, typically operating in the few MHz frequency range. This excitation induces eddy currents in the target. The eddy currents then induce currents in a set of three receive (RX) coils, with the induced signals depending on the angle of the target relative to the coils.

This process involves a two-step induction mechanism: first, the TX coil induces eddy currents in the target, and second, these eddy currents induce a response in the RX coils. While effective, this method has several limitations. As the size of the target and the coil system decreases, the received signal strength diminishes, making it increasingly difficult to achieve accurate position sensing. This reduction in signal strength can lead to challenges in maintaining electromagnetic compatibility (EMC) immunity, as smaller signals are more susceptible to noise and other interferences. Therefore, there is a need for a position sensing method that can overcome these challenges, particularly in applications requiring smaller and more compact designs.

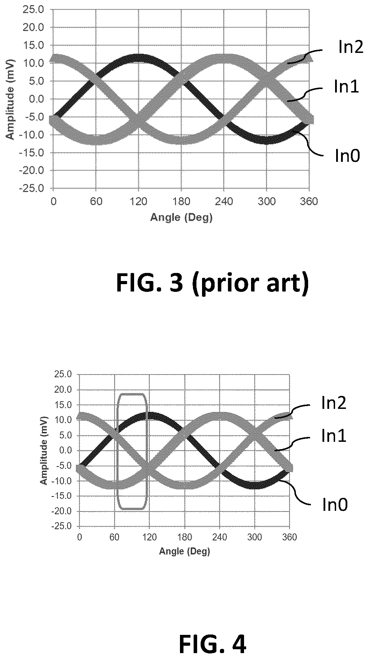

State-of-the-art inductive position sensors, such as for example illustrated in FIG. 2, typically employ a single transmit (TX) coil, a target, and three receive (RX) coils to generate signals. These signals are shown in FIG. 3 and can be mathematically described by specific equations, where the signal components are influenced by the rotor angle and a common mode component.

$$IN_0 = A_{rotor} \sin\left(\emptyset - \frac{1}{6}\pi\right) + A_{common}$$

$$IN_1 = A_{rotor} \sin\left(\emptyset - \frac{5}{6}\pi\right) + A_{common}$$

$$IN_2 = A_{rotor} \sin\left(\emptyset - \frac{9}{6}\pi\right) + A_{common}$$

In these equations $IN_0$, $IN_1$, and $IN_2$ are the amplitudes of the current or voltage amplitude of the receive coils.

To eliminate the common mode signal and isolate the position-dependent information, anti-wound RX coils are used. This results in three-phase amplitude-modulated signals that vary with the angle of the target.

The angular position of the target is then reconstructed using a transformation which calculates the angular position of the target from the three-phase amplitude modulated signals.

Such a transformation may be a Clarke transformation, wherein the angle is determined as the arctangent of the ratio of a sine and cosine component wherein the sine and cosine components are derived from the received signals.

$$Angle = \tan^{-1}\left(\frac{SIN}{COS}\right)$$

wherein:

$$SIN = IN_0 - IN_1$$

$$COS = [(IN_2 - IN_0) - (IN_1 - IN_2)]/\sqrt{3}$$

However, achieving adequate received signal strength for reliable noise and electromagnetic compatibility (EMC) performance requires larger coil systems and target sizes. This necessity conflicts with current trends toward miniaturization and cost reduction in sensor design.

**Summary of the invention**

It is an object of embodiments of the present invention to provide a good method and device for determining the position of a target.

The above objective is accomplished by a method and device according to the present invention.

In a first aspect embodiments of the present invention relate to a position sensor for determining a position of a target.

The position sensor comprises the following components:

- A center-tapped transmit coil comprising: a first terminal, a center-tap, and a second terminal. The coil is divided into two parts, with the first part situated between the first terminal and the center-tap, and the second part located between the center-tap and the second terminal.
- A transmitter that includes a positive output terminal connected to the first terminal of the transmit coil and a negative output terminal connected to the second terminal of the transmit coil. The transmitter is designed to apply an oscillating signal between the first and second terminals of the transmit coil.
- A receiver that comprises a first receive input, a second receive input, and a third receive input.

The first terminal of the transmit coil is electrically connected, via a first electrical coupling, to one of the receive inputs. The second terminal of the transmit coil is electrically connected, via a second electrical coupling, to a different receive input. The center tap of the transmit coil is electrically connected, via a third electrical coupling, to the remaining receive input.

- A processing circuit that is configured to apply a transformation to the signals received from the three receive inputs in order to calculate the position of the target relative to the center-tapped transmit coil.

In embodiments of the present invention the position sensor comprises the target. In embodiments of the present invention a change of the position of the target results in a change of the inductance imbalance of the center-tapped transmit coil.

It is an advantage of embodiments of the present invention that it relies on a single step of induction between the center-tapped TX coil and the target for determining the position of the target. In embodiments of the present invention a position of the target relative to the transmit coil induces an inductance imbalance in the two parts of the transmit coil. It is an advantage of embodiments of the present invention that this single step of induction leads to a larger useful signal amplitude compared to position sensors which are using a coil system composed of one transmit coil and three receive coils. It is therefore also an advantage of a position sensor in accordance with embodiments of the present invention that it lends itself to miniaturized designs.

In embodiments of the present invention the transformation which is used may be a transformation which is used for calculating the angular position of the target from three-phase amplitude modulated signals obtained using a single transmit coil and three receive coils, wherein the three-phase amplitude modulated signals are shifted 120° with each other.

It is an advantage of such embodiments of the present invention that existing conventional inductive position sensor ICs based on state of the art transformations can be used to detect the target position.

In embodiments of the present invention such a transformation may be a Clarke transformation.

It is an advantage of embodiments of the present invention that existing conventional inductive position sensor ICs based on the Clarke transformation can be used to detect the target position.

In embodiments of the present invention the center-tapped transmit coil is a balanced center-tapped transmit coil in absence of the target or when the target is positioned in a center position of the center-tapped transmit coil.

In embodiments of the present invention the first electric coupling, the second electric coupling and the third electric coupling are capacitive couplings.

In embodiments of the present invention the center-tapped transmit coil is a linear coil. It is an advantage of embodiments of the present invention that the linear position of a target relative to the center-tapped transmit coil can be determined.

In embodiments of the present invention the center-tapped transmit coil is an arc shaped coil. It is an advantage of embodiments of the present invention that the position of the target along an arc shaped coil can be determined.

In embodiments of the present invention the position sensor comprises an additional center-tapped transmit coil, resulting in at least two center-tapped transmit coils. The additional center-tapped transmit coil features a first terminal, a center-tap, and a second terminal, with the coil divided into two parts: one part between the first terminal and the center-tap, and the other part between the center-tap and the second terminal.

In such embodiments the transmitter includes an additional positive output terminal connected to the first terminal of the additional transmit coil and an additional negative output terminal connected to the second terminal of the additional transmit coil. It is configured to apply an oscillating signal between the first and second terminals of the additional transmit coil.

In such embodiments the receiver includes an additional set of three receive inputs: an additional first receive input, an additional second receive input, and an additional third receive input. The first terminal of the additional transmit coil is electrically connected via an additional first electrical coupling to one of these additional receive inputs. The second terminal of the additional transmit coil is electrically connected via an additional second electrical coupling to a different one of the additional receive inputs. The center tap of the additional transmit coil is electrically connected via an additional third electrical coupling to the remaining additional receive input.

In such embodiments the processing circuit is also configured to apply a Clarke transformation to the signals received from the additional set of receive inputs to calculate the position of the target relative to the additional center-tapped transmit coil. Furthermore, the receiver is designed to receive signals from both transmit coils, and the processing circuit is configured to calculate the positions of the target relative to both transmit coils.

In embodiments of the present invention the additional center-tapped transmit coil may be oriented in the same direction as the center-tapped transmit coil

In embodiments of the present invention the additional center-tapped transmit coil may be oriented in a different direction than the center-tapped transmit coil. It is an advantage of embodiments of the present invention that the position of the target can be obtained in different directions.

In embodiments of the present invention the processing circuit is configured to compensate for offset variations in the center-tapped transmit coil and/or mismatches in the coupling networks through calibration to balance the inductance of the center-tapped transmit coil in absence of the target or when the target is positioned in a center position of the center-tapped transmit coil.

In embodiments of the present invention configuration registers are used by the processing circuit for linearizing the target position obtained from the transformation.

It is an advantage of embodiments of the present invention that configuration registers, which are present in existing conventional inductive position sensor ICs can be used to linearize the target position.

In a second aspect embodiments of the present invention relate to a method for determining a position of a target. The method comprises the following steps:

- Applying an oscillating signal between a first terminal and a second terminal of a center-tapped transmit coil, which includes a center-tap, wherein a change in position of the target results in a change in the induction imbalance of the center-tapped transmit coils.
- Receiving signals from the first terminal, the second terminal, and the center-tap of the transmit coil.
- Processing the received signals by applying a transformation to determine the position of the target relative to the center-tapped transmit coil.

In embodiments of the present invention the processing comprises linearizing the target position obtained after the transformation.

In embodiments of the present invention the transformation may be a transformation which is used for calculating the angular position of the target from three-phase amplitude modulated signals obtained using a single transmit coil and three receive coils, wherein the three-phase amplitude modulated signals are shifted 120° with each other such as a Clarke transformation.

In embodiments of the present invention the processing comprises compensating for offset variations in the center-tapped transmit coil through calibration to balance the inductance of the center-tapped transmit coil in absence of the target or when the target is positioned in a center position of the center-tapped transmit coil.

In embodiments of the present invention the method is applied to at least two center-tapped transmit coils oriented in different directions from each other and wherein the processing comprises calculating the positions of the target relative to both transmit coils.

In embodiments of the present invention the method is applied to at least two center-tapped transmit coils oriented in the same direction and wherein the processing comprises calculating the positions of the target relative to both transmit coils.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 shows a schematic drawing of a conventional inductive position sensor principle.
FIG. 2 shows a block diagram of a conventional inductive position sensor.
FIG. 3 shows signals obtained using receive coils of a conventional position sensor.
FIG. 4 shows a useful range within which the Clarke transformation can be applied for obtaining a target position using a method or device in accordance with embodiments of the present invention.
FIG. 5 shows a block diagram of a position sensor in accordance with embodiments of the present invention.
FIG. 6 shows a detailed block diagram of an exemplary position sensor in accordance with embodiments of the present invention.
FIG. 7 shows the signals at the input of the receiver, in function of the target position, of an exemplary position sensor in accordance with embodiments of the present invention.
FIG. 8 shows the output position (in degrees) at the output of the processing circuit in function of the target position, obtained using a position sensor or a method in accordance with embodiments of the present invention.
FIG. 9 shows a schematic drawing of a linear center-tapped transmit coil, for a position sensor in accordance with embodiments of the present invention.
FIG. 10 shows a schematic drawing of an arc shaped center-tapped transmit coil, for a position sensor in accordance with embodiments of the present invention.
FIG. 11 shows a schematic drawing of two linear center-tapped transmit coils which are oriented in different directions, for a position sensor in accordance with embodiments of the present invention.
FIG. 12 shows a block diagram of a position sensor comprising two center-tapped transmit coils in accordance with embodiments of the present invention.
FIG. 13 shows a flow chart of a method in accordance with embodiments of the present invention.

Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a center-tapped transmit coil, reference is made to a transmit coil with a first terminal and a second terminal at its open ends and with a center-tap between the first terminal and the second terminal. In embodiments of the present invention the center position of the target refers to the position where the target is aligned with the midpoint of the sensor's range of motion with respect to the center-tapped transmit coil. In linear shaped transmit coils the center position may be substantially in the middle of the linear travel range. In arc shaped transmit coils the center position may be substantially in the middle of the target's angular travel range.

In the present invention, a position sensor and method are introduced which rely on the detection of inductance imbalance induced by a change in target position. The device and method require a single center-tapped transmit (TX) coil whose three terminals are coupled to a receiver and wherein the processing of the received signals to calculate the position of the target is based on a transformation which is suitable for calculating the angular position of the target from three-phase amplitude modulated signals obtained using a single transmit coil and three receive coils, wherein the three-phase amplitude modulated signals are shifted 120° with each other. It is thereby advantageous that a conventional inductive position sensor integrated circuit (IC) can be used for calculating the relative position of the target. In embodiments of the present invention such a transformation may be a Clarke transformation.

In embodiments of the present invention, instead of using a coil system composed of four coils (one Tx and three Rx), only one balanced center-tapped TX coil is used in a way where the balance between the inductance of the two parts is perturbed vs. the target position. Therefore, the signal on the center-tap which is proportional to the inductance imbalance will carry the position information. The advantage is that this concept relies on a single step of induction between the TX coil and the target, which leads to a larger useful signal amplitude and therefore lends itself to miniaturized designs.

The fact that the proposed solution involves a single induction step allows for larger received signal strengths compared to conventional inductive position sensor coil system solutions involving two induction steps. As less coils are required and as less coupling steps are required the printed circuit board (PCB) module can be reduced in size and a better electro-magnetic compatibility (EMC) performance can be obtained.

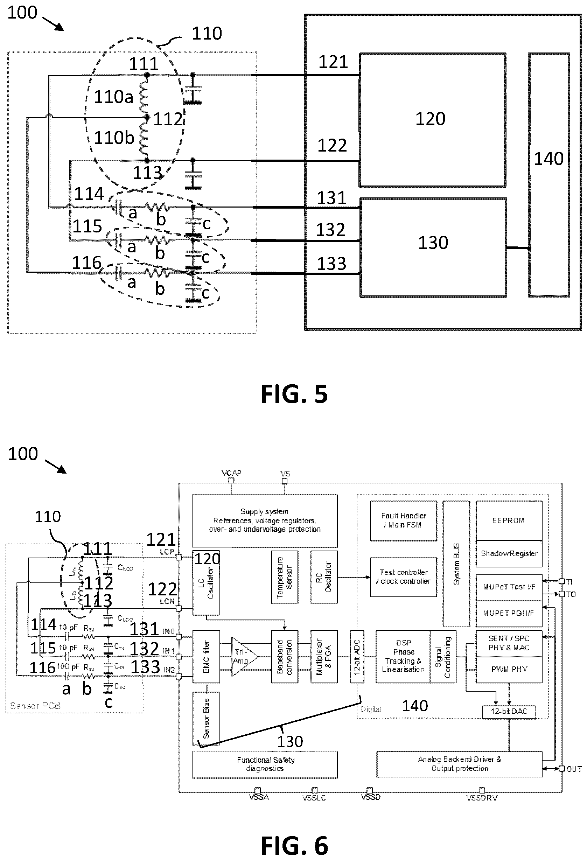

In a first aspect embodiments of the present invention relate to a position sensor. An exemplary embodiment of a position sensor 100, in accordance with embodiments of the present invention, is shown in FIG. 5.

The position sensor 100 includes a center-tapped transmit coil 110, which consists of a first terminal 111, a center-tap 112, and a second terminal 113. The transmit coil 110 is divided into two parts: the first part 110a, which is located between the first terminal 111 and the center-tap 112, and the second part 110b, which is located between the center-tap 112 and the second terminal 113.

The sensor further comprises a transmitter 120. This transmitter 120 has a positive output terminal 121 that is electrically connected to the first terminal 111 of the transmit coil 110. Additionally, it has a negative output terminal 122 that is electrically connected to the second terminal 113 of the transmit coil 110. The transmitter 120 is designed to apply an oscillating signal between the first terminal 111 and the second terminal 113 of the transmit coil 110. In embodiments of the present invention the frequency of the oscillating signal may for example be between 2 and 5 Mhz.

The sensor also comprises a receiver 130 comprising a first receive input 131, a second receive input 132, and a third receive input 133, wherein the first terminal 111 of the transmit coil 110 is electrically coupled via a first electrical coupling 114 to one of the first, second, or third receive inputs, and wherein the second terminal 113 of the transmit coil 110 is electrically coupled via a second electrical coupling 115 to a different one of the first, second, or third receive inputs, and wherein the center tap 112 of the transmit coil 110 is electrically coupled via a third electrical coupling 116 to the remaining one of the first, second, or third receive inputs.

Finally, the position sensor 100 incorporates a processing circuit 140. This processing circuit 140 is configured to apply the transformation to the signals received on the first receive input 131, the second receive input 132, and the third receive input 133, thereby calculating the position of the target relative to the center-tapped transmit coil 110.

It is an advantage of embodiments of the present invention that existing conventional inductive position sensor ICs that utilize a transformation calculating the angular position of the target from three-phase amplitude modulated signals obtained using a single transmit coil and three receive coils, wherein the three-phase amplitude modulated signals are shifted 120° with each other can still be employed to detect the target position.

Such a transformation may be a Clarke transformation. However, also other transformations for obtaining the angular position from signals obtained from a state of the art setup comprising a transmit coil and 3 receive coils are possible. Such another transformation may for example be based on differences between the three-phase amplitude modulated signals are shifted 120° and on ratios of these differences. From these ratios the angular position of the target is calculated.

It is an advantage of embodiments of the present invention that a transformation which can be used for calculating the angular position from signals obtained from a state of the art setup comprising a transmit coil and 3 receive coils, can also be used for calculating the angular position from signals from the center-tapped transmit coil of the present invention.

In embodiments of the present invention the signal envelope from the center-tap 112 of the TX coil may transition as the target position changes, from positive to negative or from negative to positive, depending on the starting position of the target.

In embodiments of the present invention the first terminal 111 of the transmit coil 110 may for example be electrically coupled to the first receive input, and the second terminal 113 may be electrically coupled to the second receive input, and the center tap 112 of the transmit coil 110 may be electrically coupled to the third receive input.

In embodiments of the present invention the first electric coupling 114, the second electric coupling 115 and the third electric coupling 116 are capacitive couplings. An example thereof is illustrated in FIG. 5. In this figure the capacitive couplings comprise a series connection of a capacitor (a) and a resistor (b) between a terminal of the transmit coil and a receive input of the receiver, and a capacitor (c) between the input of the receiver and ground. In embodiments of the present invention the coupling capacitors (a) may be sufficient for making the capacitive couplings.

FIG. 6 shows a detailed block diagram of an exemplary position sensor in accordance with embodiments of the present invention. In this example a state of the art integrated circuit is used for the transmitter 120, the receiver 130 and the processing circuit 140.

Capacitive couplings 114, 115, 116 are used for connecting the terminals of the transmit coil with the receiver inputs of the receiver 130 of the state of the art integrated circuit. In this exemplary embodiment of the present invention the capacitance of the coupling capacitor of the first capacitive coupling 114 between the first terminal 111 and the first receive input is 10 pF and the capacitance of the coupling capacitor of the second capacitive coupling 115 between the second terminal 113 and the second receive input is 10 pF. In this exemplary embodiment of the present invention the capacitance of the coupling capacitor of the third capacitive coupling 116 between the first center tap 112 and the third receive input is 100 pF. The invention is, however, not limited to these capacitance values.

In this example the receiver 130 comprises an EMC filter for filtering signals from the receiver inputs, an amplifier for amplifying the filtered signals, a baseband convertor for converting the amplified signals to baseband, a multiplexer and programmable gain amplifier and an ADC for converting the processed analog signals in digital signals.

The transmitter 120 comprises an LC oscillator for generating the oscillating signal.

The processing circuit 140 comprises a digital signal processor for applying the transformation (e.g. Clarke) to the ADC converted signals. The processing circuit comprises configuration registers for controlling the implemented algorithm.

One may consider the signals produced by a conventional coil system operating around 90° (in a range between 60° and 120°), as depicted in FIG. 4 and connect the center-tap 112 to the third input IN2, the positive terminal to the first input IN0, and the negative terminal to the second input IN1. The amplitude of the signals on IN0, IN1, and IN2 are each assigned to the different input variables of the transformation (e.g. Clarke transformation).

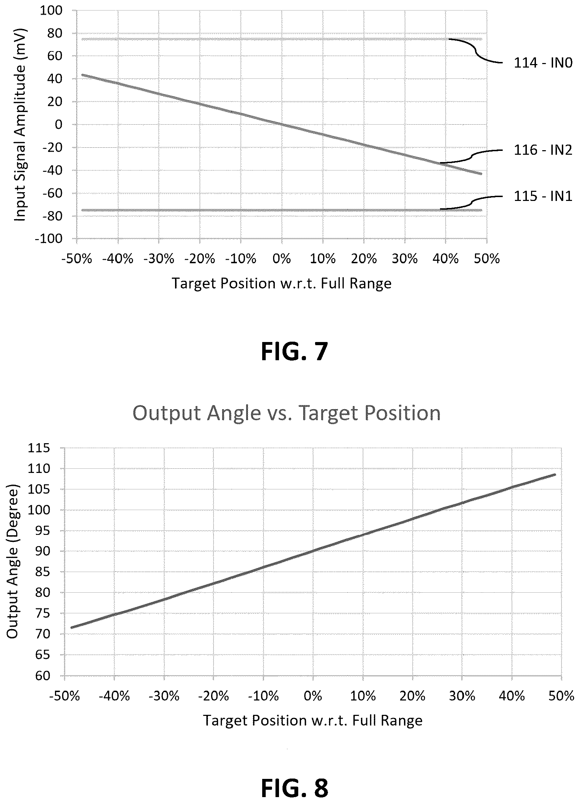

The three received signals would then behave as shown in FIG. 7. The IN2 signal decreases linearly from positive to negative as the target moves across its mechanical range, while the IN0 and IN1 signals remain constant.

FIG. 8 illustrates that, in an exemplary configuration where the target position changes by ±10% relative to the center position, a 100 pF coupling capacitor on IN2 and 10 pF coupling capacitors on IN0 and IN1 result in an output angle range of 90° ± 3.8°. It is important to note that the final output angle on the interface can be adjusted to center around any angle other than 90° by applying an offset angle using a configuration register. Additionally, the relationship between the final output angle and the target position may be linearized by utilizing the existing configuration registers, as is done in conventional rotating applications.

In embodiments of the present invention the coupling capacitors connected between the transmit coil terminals and the receive inputs may be used for adjusting the output angle range of the received signals.

With relation to FIG. 5 and FIG. 7 it is for example important to note that increasing the coupling capacitor 116a on the IN2 input increases the slope of IN2 relative to the target position, whereas decreasing the coupling capacitors 114a, and 115a on the IN0 and IN1 inputs reduces their respective signal magnitudes. Both of these effects serve to expand the output angle range, which is proportional to the ratio of IN2 to IN0.

In embodiments of the present invention also, or alternatively, internal configuration registers of the position sensor may be used to adjust the output angle range.

A third way of adjusting the output angle range, which may be used in combination with the two other ones, may be by design of the transmit coil. The first part of the coil might for example be different from the second part of the coil. It might for example be bigger in inductance or longer in length than the second part of the coil.

In embodiments of the present invention signals received on the first, the second, and the third receive input are used as variables for the transformation (e.g. Clarke transformation). The output range of the transformation is dependent on the amplitude of the variables with respect to each other and therefore on the selection of which input that is used per variable.

It is an advantage of embodiments of the present invention that the proposed solution is inherently resistant to variations in TX signal amplitude due to its reliance on differential measurement. This differential approach allows the system to effectively distinguish between amplitude changes in the center-tap signal caused by position shifts and those caused by variations in the TX signal amplitude.

In embodiments of the present invention the center-tapped transmit coil 110 is a balanced center-tapped transmit coil in absence of the target or when the target is positioned in a center position of the center-tapped transmit coil.

In embodiments of the present invention the processing circuit 140 is configured to compensate for offset variations in the center-tapped transmit coil 110 through calibration to balance the inductance of the center-tapped transmit coil in absence of the target or when the target is positioned in a center position of the center-tapped transmit coil.

In embodiments of the present invention existing PCB offset calibration hardware in conventional inductive position sensor ICs can be utilized for this calibration. The calibration may for example correct mismatches in the TX coil or coupling capacitors.

In embodiments of the present invention the processing circuit may be configured to adjust the received signals to their expected values when there is no target present, ensuring that the system is balanced.

Specifically, this involves adjusting the signals so that the sum of the three differential signals at the receiver inputs equals zero.

In a position sensor in accordance with embodiments of the present invention where the center tap 112 is connected to the third input IN2, the positive terminal to the first input IN0, and the negative terminal to the second input IN1, the calibration may be such that IN2 is brought to 0 and IN1 is brought to be equal to -IN0. As the compensation is done on the differential signals, this means that the goal is to bring (IN1 - IN2) to be equal to (IN2 - IN0) and that (IN0-IN1) is -2x as each of them. In the end, as usual, the sum of the three differential signals should be zero. Note that it is often desirable that the PCB offset calibration be done with the target mounted because the target also affects the offset. In that case it is advised to do the calibration described with the target in its center position with respect to the mechanical travel range.

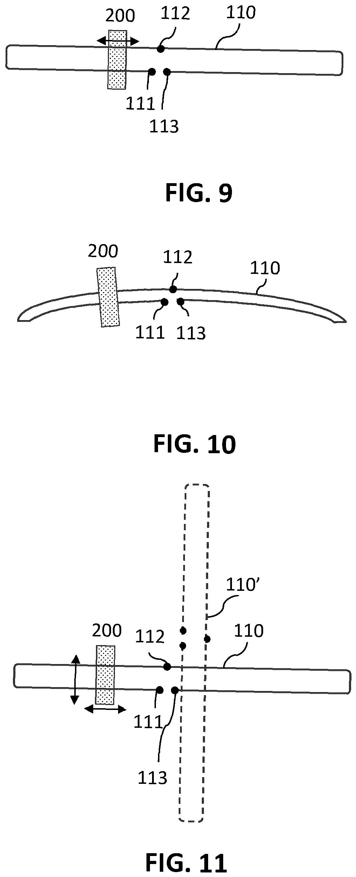

In embodiments of the present invention the center-tapped transmit coil 110 is a straight elongated coil (i.e. a linear coil). An example thereof is shown in FIG. 9. It shows a wire loop which extends along a straight line. The loop may comprise a plurality of twisted wires. The loop is open and comprises a first terminal 111 and a second terminal 113 at the open ends. The loop, moreover, comprises a center tap 112 substantially at the middle point of the linear travel range.

In embodiments of the present invention the travel range may extend over the full size of the transmit coil. This is, however, not strictly required. The travel range may for example be smaller than the size of the transmit coil.

In embodiments of the present invention the center-tapped transmit coil 110 is an arc shaped coil. An example thereof is shown in FIG. 10. It shows a wire loop which extends along an arc shaped line. The loop may comprise a plurality of twisted wires. The loop is open and comprises a first terminal 111 and a second terminal 113 at the open ends. The loop, moreover, comprises a center tap 112 substantially at the middle point of the arc shaped travel range.

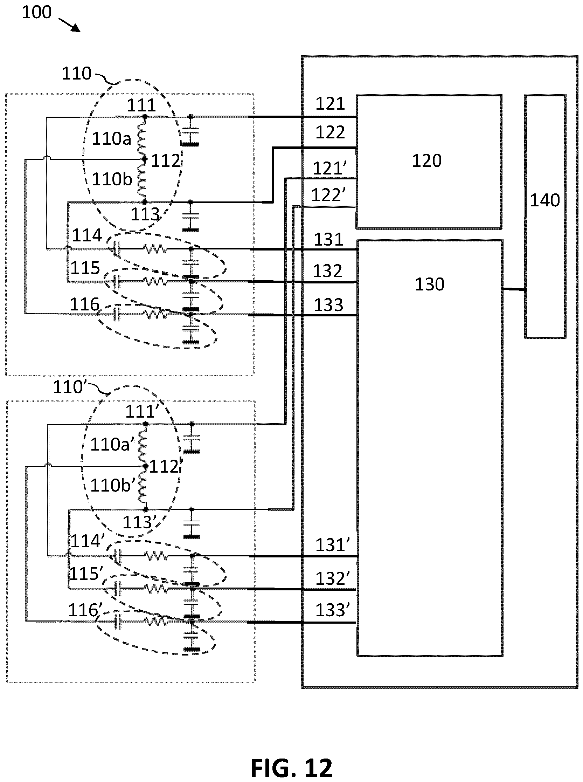

In embodiments of the present invention the position sensor 100 includes an additional center-tapped transmit coil 110', which is oriented in a different direction than the original center-tapped transmit coil 110. FIG. 11 shows a schematic drawing of two center-tapped transmit coils 110, 110' which are oriented in a different direction. In this example the transmit coils are linear transmit coils. FIG. 12 shows a block diagram of such a position sensor 100.

The additional center-tapped transmit coil 110' comprises a first terminal 111', a center-tap 112', and a second terminal 113'. The coil is divided into two parts: the first part 110a' is located between the first terminal 111' and the center-tap 112', and the second part 110b' is located between the center-tap 112' and the second terminal 113'.

The transmitter 120 includes an additional positive output terminal 121', which is electrically coupled to the first terminal 111' of the additional transmit coil, and an additional negative output terminal 122', which is electrically coupled to the second terminal 113' of the additional transmit coil. The transmitter 120 is configured to apply an oscillating signal between the first terminal 111' and the second terminal 113' of the additional transmit coil 110'.

The receiver 130 comprises an additional set of inputs: an additional first receive input 131', an additional second receive input 132', and an additional third receive input 133'. The first terminal 111' of the additional transmit coil 110' is electrically coupled to one of these inputs using an additional first electrical coupling 114'. The second terminal 113' of the additional transmit coil 110' is electrically coupled to a different input using an additional second electrical coupling 115'. The center-tap 112' of the additional transmit coil 110' is electrically coupled to the remaining input using an additional third electrical coupling 116'.

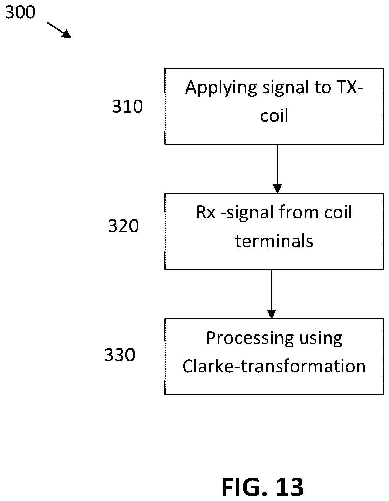

In a second aspect embodiments of the present invention relate to a method 300 for determining a position of a target 200. An exemplary flow chart of such a method is shown in FIG. 13. The method comprises applying 310 an oscillating signal between a first terminal 111 and a second terminal 113 of a center-tapped transmit coil 110, which comprises a center-tap 112 between the first terminal 111 and the second terminal 113. The method also comprises receiving 320 signals from the first terminal 111, the second terminal 113, and the center-tap 112. Finally, the method comprises processing 330 the received signals by applying a transformation (e.g. Clarke) to calculate the position of the target relative to the center-tapped transmit coil.

In embodiments of the present invention the processing 330 comprises linearizing the target position obtained after the transformation.

In embodiments of the present invention the processing comprises compensating for offset variations in the center-tapped transmit coil 110 through calibration to balance the inductance of the center-tapped transmit coil in absence of the target or when the target is positioned in a center position of the center-tapped transmit coil.

In embodiments of the present invention the method is applied to at least two center-tapped transmit coils 110 oriented in different directions from each other and wherein the processing 330 comprises calculating the positions of the target relative to both transmit coils.

In embodiments of the present invention the method is applied to at least two center-tapped transmit coils 110 oriented in the same direction and wherein the processing 330 comprises calculating the positions of the target relative to both transmit coils.

In embodiments of the present invention the method includes a calibration step to balance the inductance of the center-tapped transmit coil in the absence of the target. In embodiments of the present invention the calibration is performed when the target is positioned at the center of the center-tapped transmit coil. This calibration step compensates for offset variations in the center-tapped transmit coil 110.

**Claims**

1. A position sensor (100) for determining a position of a target (200), the position sensor comprising:

   - a center-tapped transmit coil (110) comprising a first terminal (111), a center-tap (112), and a second terminal (113), with a first part (110a) of the transmit coil between the first terminal (111) and the center-tap (112) and a second part (110b) of the transmit coil between the center-tap and the second terminal,
- a transmitter (120) comprising a positive output terminal (121) electrically coupled with the first terminal (111) of the transmit coil and a negative output terminal (122) electrically coupled with the second terminal (113) of the transmit coil and configured for applying an oscillating signal between the first terminal (111) and the second terminal (113) of the transmit coil (110),
- a receiver (130) comprising a first receive input (131), a second receive input (132), and a third receive input (133), wherein the first terminal (111) of the transmit coil (110) is electrically coupled using a first electrical coupling (114) with one of the first, second, or third receive input, and wherein the second terminal (113) of the transmit coil (110) is electrically coupled using a second electrical coupling (115) to a different one of the first, second, or third receive input and wherein the center tap (112) of the transmit coil (110) is electrically coupled using a third electrical coupling (116) to the remaining one of the first, second, or third receive input,
- a processing circuit (140) configured for applying a transformation to signals received on the first (131), the second (132), and the third (133) receive input to calculate the position of the target relative to the center-tapped transmit coil.

2. A position sensor (100) according to claim 1, wherein the transformation is a Clarke transformation.

3. A position sensor (100) according to any of the previous claims, wherein the center-tapped transmit coil (110) is a balanced center-tapped transmit coil in absence of the target or when the target is positioned in a center position of the center-tapped transmit coil.

4. A position sensor (100) according to any of the previous claims, wherein the first electric coupling (114), the second electric coupling (115) and the third electric coupling (116) are capacitive couplings.

5. A position sensor (100) according to any of the previous claims wherein the center-tapped transmit coil (110) is a linear coil.

6. A position sensor (100) according to any of the claims 1 to 4 wherein the center-tapped transmit coil (110) is an arc shaped coil.

7. A position sensor (100) according to any of the previous claims, comprising an additional center-tapped transmit coil (110'), the additional center-tapped transmit coil (110') comprising a first terminal (111'), a center-tap (112'), and a second terminal (113'), with a first part (110a') of the additional transmit coil between the first terminal (111') and the center-tap (112') and a second part (110b') of the additional transmit coil between the center-tap (112') and the second terminal (113'),

- the transmitter (120) comprising an additional positive output terminal (121') electrically coupled with the first terminal (111') of the additional transmit coil and an additional negative output terminal (122') electrically coupled with the second terminal (113') of the additional transmit coil and configured for applying an oscillating signal between the first terminal (111') and the second terminal (113') of the additional transmit coil (110'),
- the receiver (130) comprising an additional first receive input (131'), an additional second receive input (132'), and an additional third receive input (133'), wherein the first terminal (111') of the additional transmit coil (110') is electrically coupled using an additional first electrical coupling (114') with one of the additional first, second, or third receive input, and wherein the second terminal (113') of the additional transmit coil (110') is electrically coupled using an additional second electrical coupling (115') to a different one of the additional first, second, or third receive input and wherein the center tap (112') of the additional transmit coil (110') is electrically coupled using an additional third electrical coupling (116') to the remaining one of the first, second, or third receive input,
- wherein the processing circuit (140) is additionally configured for applying a transformation to signals received on the additional first (131'), the additional second (132'), and the additional third (133') receive input to calculate the position of the target relative to the additional center-tapped transmit coil.

8. A position sensor (100) according to claim 7 wherein the additional center-tapped transmit coil (110') is oriented in a different direction than the center-tapped transmit coil (110').

9. A position sensor (100) according to any of the previous claims wherein the processing circuit (140) is configured to compensate for offset variations in the center-tapped transmit coil (110, 110') through calibration to balance the inductance of the center-tapped transmit coil in absence of the target or when the target is positioned in a center position of the center-tapped transmit coil.

10. A position sensor (100) according to any of the previous claims wherein configuration registers are used by the processing circuit (140) for linearizing the target position obtained from the transformation.

11. A method (300) for determining a position of a target (200), the method comprising:

    - applying (310) an oscillating signal between a first terminal (111) and a second terminal (113) of a center-tapped transmit coil (110) which comprises a center-tap (112),
    - receiving (320) signals from the first terminal (111) the second terminal (113) and the center-tap (112),
    - processing (330) the received signals by applying a transformation to calculate the position of the target relative to the center-tapped transmit coil.

12. A method (300) according to claim 11, wherein the processing (330) comprises linearizing the target position obtained after the transformation.

13. A method (300) according to any of the claims 11 or 12 wherein the processing comprises compensating for offset variations in the center-tapped transmit coil (110) through calibration to balance the inductance of the center-tapped transmit coil in absence of the target or when the target is positioned in a center position of the center-tapped transmit coil.

14. A method (300) according to any of the claims 11 to 13 wherein the method is applied to at least two center-tapped transmit coils (110, 110') wherein the processing (330) comprises calculating the positions of the target relative to both transmit coils.

15. A method (300) according to any of the claims 11 to 13 wherein the method comprises a calibration step to balance the inductance of the center-tapped transmit coil in absence of the target or when the target is positioned in a center position of the center-tapped transmit coil to compensate for offset variations in the center-tapped transmit coil (110).

# FIG. 1 (prior art)

# FIG. 2 (prior art)

FIG. 3 (prior art)

FIG. 4

**FIG. 5**

**FIG. 6**

**FIG. 7**

Output Angle vs. Target Position

**FIG. 8**

**FIG. 9**

**FIG. 10**

**FIG. 11**

**FIG. 12**

300

310    Applying signal to TX-
       coil

320    Rx -signal from coil
       terminals

330    Processing using
       Clarke-transformation

**FIG. 13**

**EUROPEAN SEARCH REPORT**

Application Number

EP 24 19 9146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 760 928 B1 (MICROSEMI CORP [US]) 1 September 2020 (2020-09-01) * column 7, line 36 - column 9, line 29; figure 5 * ----- | 1-15 | INV. G01D5/20 |
| A | US 8 872 508 B2 (SZULYK ZENON P [US]; JAYARAMAN GANGA P [US] ET AL.) 28 October 2014 (2014-10-28) * the whole document * ----- | 1-15 | |
| A | US 11 525 716 B2 (MELEXIS TECH SA [CH]) 13 December 2022 (2022-12-13) * the whole document * ----- | 1-15 | |

TECHNICAL FIELDS SEARCHED (IPC)

G01D

The present search report has been drawn up for all claims

| Place of search | Date of completion of the search | Examiner |
|---|---|---|
| Munich | 10 February 2025 | Lyons, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9146

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | | Publication date |
|---|---|---|---|---|---|
| US 10760928 | B1 | 01-09-2020 | CN | 113424025 A | 21-09-2021 |
| | | | DE | 112019006893 T5 | 04-11-2021 |
| | | | US | 2020271480 A1 | 27-08-2020 |
| | | | WO | 2020171840 A1 | 27-08-2020 |
| US 8872508 | B2 | 28-10-2014 | CN | 103502777 A | 08-01-2014 |
| | | | DE | 112012000422 T5 | 17-10-2013 |
| | | | GB | 2502001 A | 13-11-2013 |
| | | | US | 2012176124 A1 | 12-07-2012 |
| | | | WO | 2012094610 A2 | 12-07-2012 |
| US 11525716 | B2 | 13-12-2022 | CN | 114993163 A | 02-09-2022 |
| | | | EP | 4047323 A1 | 24-08-2022 |
| | | | US | 2022260357 A1 | 18-08-2022 |

EPO FORM P0459

For more details about this annex : see Official Journal of the European Patent Office, No. 12/82